Europäisches Patentamt

European Patent Office

Office européen des brevets

(19)

(11) Numéro de publication : **0 485 286 A1**

# DEMANDE DE BREVET EUROPEEN

(12)

(21) Numéro de dépôt : **91402974.9**

(22) Date de dépôt : **06.11.91**

(51) Int. Cl.⁵ : **B62D 1/18**, F16B 2/18

(30) Priorité : **09.11.90 FR 9013929**

(43) Date de publication de la demande :
**13.05.92 Bulletin 92/20**

(84) Etats contractants désignés :
**AT BE CH DE DK ES FR GB GR IT LI LU NL SE**

(71) Demandeur : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**Rue Jacques Offenbach**
**F-25700 Valentigney (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif perfectionné de blocage en position d'une colonne de direction réglable de véhicule automobile.**

(57)    Ce dispositif de blocage en position d'une colonne de direction réglable de véhicule automobile, du type comportant une structure de support de colonne reliée au reste de la structure du véhicule et comportant deux flasques entre lesquels est disposée la colonne et des moyens de blocage de la colonne en position par rapprochement des flasques, comprenant un tirant (10) s'étendant entre les flasques, dont la première extrémité (11) est en appui sur l'un des flasques et la seconde est reliée à des moyens de blocage à excentrique (12) munis d'au moins une came excentrée (13, 17) reliée à un levier de manoeuvre (14) et à la seconde extrémité (15) du tirant (10) et en appui sur l'autre flasque de la structure pour permettre le rapprochement de ces flasques et bloquer la colonne en position, est caractérisé en ce qu'au moins un organe de roulement (18,19) est interposé entre ladite au moins une came excentrée et le flasque correspondant de la structure du support.

FIG.2

EP 0 485 286 A1

La présente invention concerne un dispositif de blocage en position d'une colonne de direction réglable de véhicule automobile.

Plus particulièrement, la présente invention se rapporte à un tel dispositif de blocage du type comportant une structure de support de colonne reliée au reste de la structure du véhicule et comprenant deux flasques entre lesquels est disposée la colonne et des moyens de blocage de la colonne en position par rapprochement des flasques, comprenant un tirant s'étendant entre les flasques, dont la première extrémité est en appui sur l'un des flasques et la seconde est reliée à des moyens de blocage à excentrique munis d'au moins une came excentrée reliée à un levier de manoeuvre et à la seconde extrémité du tirant et en appui sur l'autre flasque de la structure de support pour permettre le rapprochement de ces flasques et bloquer la colonne en position.

Une telle structure est bien connue dans l'état de la technique et est décrite par exemple dans le document FR-A-2.360.454 et plus particulièrement en regard des figures 1 et 4 de ce document.

Cependant, tous les moyens de blocage à excentrique connus dans l'état de la technique présentent un certain nombre d'inconvénients dans la mesure où ils sont relativement difficiles à manoeuvrer.

En effet, les cames excentrées de ces moyens de blocage à excentrique viennent en appui directement sur une surface correspondante de l'un des flasques de la structure de support pour permettre le rapprochement de ceux-ci et bloquer la colonne en position. On conçoit que plus le serrage à obtenir est important, plus la manoeuvre et le déplacement de cette came excentrée sont difficiles.

Le but de l'invention est donc de résoudre ces problèmes en proposant un dispositif de blocage en position d'une colonne réglable de véhicule automobile, qui soit simple, fiable et qui puisse être manoeuvré facilement.

A cet effet, l'invention a pour objet un dispositif de blocage du type tel que décrit précédemment, caractérisé en ce qu'au moins un organe de roulement est interposé entre ladite au moins une came excentrée et le flasque correspondant de la structure du support.

L'organe de roulement peut par exemple être constitué par une bille disposée dans un évidement correspondant de l'un des éléments, flasque ou came, et adaptée pour coopérer avec l'autre élément, came ou flasque, pour faciliter le déplacement de ces éléments l'un par rapport à l'autre.

L'invention sera mieux comprise à l'aide de la description qui va suivre donnée uniquement à titre d'exemple et faite en se référant aux dessins annexés sur lesquels :

– La Fig.1 représente une vue en coupe d'un dispositif de blocage d'une colonne de direction réglable de véhicule automobile, de l'état de la technique ; et

– La Fig.2 représente une vue en perspective éclatée de moyens de blocage à excentrique entrant dans la constitution d'un dispositif de blocage selon l'invention ;

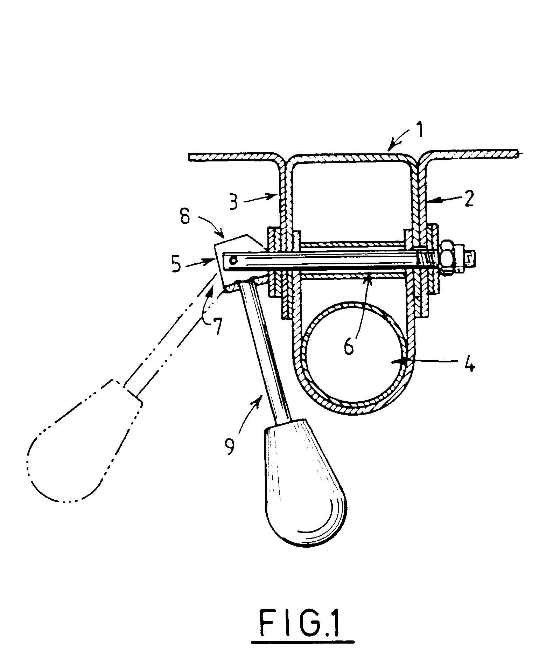

Ainsi qu'on peut le voir sur la Fig.1, un dispositif de blocage en position d'une colonne de direction réglable de véhicule automobile, comporte de manière générale une structure de support de colonne désignée par la référence générale 1 sur cette figure, reliée au reste de la structure du véhicule et comportant deux flasques 2 et 3 entre lesquels est disposée la colonne de direction 4. Ce dispositif de blocage comporte également des moyens 5 de blocage de la colonne en position par rapprochement des flasques, ces moyens de blocage comprenant un tirant 6 s'étendant entre les flasques et dont la première extrémité est en appui sur l'un des flasques et la seconde est reliée à des moyens 7 de blocage à excentrique munis d'au moins une came excentrée 8 reliée à un levier de manoeuvre 9 et à la seconde extrémité du tirant 6 et en appui sur l'autre flasque de la structure, pour permettre le rapprochement de ces flasques et bloquer la colonne en position.

Pour une description plus détaillée de ce type de dispositifs de blocage, on se reportera au document français précité.

Ainsi qu'on l'a mentionné précédemment, ces dispositifs présentent un certain nombre d'inconvénients au niveau de la manoeuvre de la came excentrée.

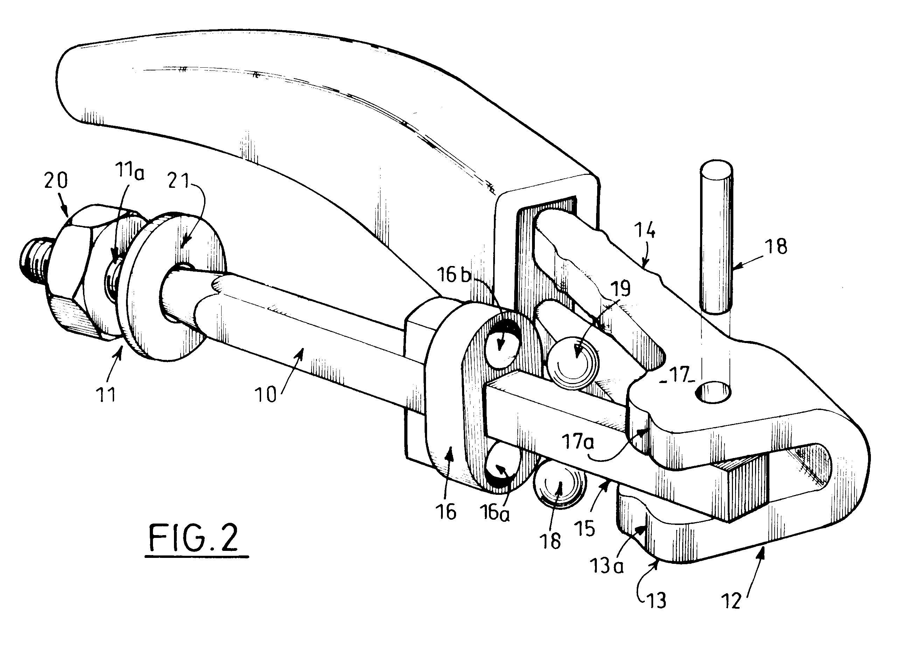

Le but de l'invention est de résoudre ces problèmes en proposant un dispositif représenté sur la Fig.2. On notera tout d'abord que le dispositif de blocage en position de la colonne de direction d'un véhicule automobile, selon l'invention, est un dispositif analogue à celui décrit en regard de la Fig.1, c'est-à-dire qu'il comporte une structure de support de colonne reliée au reste de la structure du véhicule et munie de deux flasques entre lesquels est disposée la colonne.

Le dispositif de blocage selon l'invention comporte également des moyens de blocage de la colonne en position par rapprochement des flasques, ces moyens de blocage comprenant par exemple un tirant 10 s'étendant entre les flasques, dont la première extrémité 11 est en appui sur l'un des flasques et la seconde est reliée à des moyens 12 de blocage à excentrique munis d'au moins une came excentrée 13 reliée à un levier de manoeuvre 14 et à la seconde extrémité 15 du tirant et en appui sur l'autre flasque de la structure de support pour permettre le rapprochement de ces flasques et bloquer la colonne en position. Ainsi que cela est représenté, un organe d'appui intermédiaire 16 peut être interposé entre la ou chaque came excentrée des moyens de blocage et l'autre flasque de la structure de support.

Dans le mode de réalisation représenté sur cette figure, les moyens de blocage comprennent deux cames excentrées 13 et 17 disposées symétriquement de part et d'autre du tirant et plus particulièrement de la seconde extrémité 15 de celui-ci. Des organes de roulement 18 et 19 constitués par exemple par des billes sont interposés entre ces cames et l'organe d'appui intermédiaire 16. Dans ce mode de réalisation, ces billes sont disposées dans des évidements correspondants 16a et 16b de l'organe d'appui intermédiaire 16, ces évidements étant ménagés de part et d'autre du tirant 10, en regard des cames.

On conçoit que le déplacement des cames par rapport au reste de la structure des moyens de blocage et en particulier de l'organe d'appui intermédiaire, est plus facile que dans les dispositifs de l'état de la technique, dans la mesure où ces organes de roulement facilitent le déplacement en translation et en rotation des différents organes entrant dans la constitution de ces moyens de blocage les uns par rapport aux autres.

On notera également que ces cames 13 et 17 de même que l'extrémité 15 du tirant comportent chacune un trou de passage d'une tige de liaison 18 traversant les cames et l'extrémité correspondante du tirant pour relier ces différents organes.

Bien que dans le mode de réalisation représenté les moyens de blocage entrant dans la constitution du dispositif de blocage selon l'invention comprennent deux cames disposées de part et d'autre de l'extrémité correspondante du tirant, il va de soi que ces moyens peuvent ne comporter qu'une seule came.

On notera également que les cames 13 et 17 peuvent en fait être constituées par les ailes d'une chape disposée autour de l'extrémité du tirant, cette chape étant venue de matière avec le levier de manoeuvre 14.

On notera également que les cames 13 et 17 comprennent chacune un évidement 13a et 17a de réception de la bille correspondante, délimitant une position de blocage. En effet, lors du déplacement du levier pour l'amener dans la position de blocage de la colonne de direction en position, les cames 13 et 17 s'appuient et se déplacent sur ces organes de roulement pour rapprocher les flasques l'un de l'autre. Lorsque les billes de roulement pénètrent dans les évidements 13a et 17a des cames, l'utilisateur perçoit une discontinuité d'effort lui indiquant que le levier et les moyens de blocage sont en position de blocage stable.

Bien que dans le mode de réalisation représenté, les billes soient disposées dans des évidements de l'organe d'appui, il va de soi qu'elles peuvent également être disposées dans des évidements prévus au niveau de la surface des cames, adaptée pour coopérer avec cet organe d'appui intermédiaire, et que celui-ci peut également comporter des évidements de réception des ces billes en position de blocage, pour engendrer une discontinuité d'effort indiquant à l'utilisateur que le levier et les moyens de blocage sont en position de blocage stable.

Plusieurs billes disposées côte-à-côte peuvent également être prévues.

Enfin, on notera que la première extrémité 11 du tirant 10 comporte une portion filetée 11a sur laquelle est disposé un écrou 20 associé, par exemple, à une rondelle 21 d'appui sur le flasque correspondant de la structure de support, cet écrou permettant de régler l'effort exercé sur les flasques pour bloquer la colonne en position.

**Revendications**

1.- Dispositif de blocage en position d'une colonne de direction réglable de véhicule automobile, du type comportant une structure de support de colonne reliée au reste de la structure du véhicule et comportant deux flasques (2, 3) entre lesquels est disposée la colonne (4) et des moyens (5) de blocage de la colonne en position par rapprochement des flasques, comprenant un tirant (10) s'étendant entre les flasques, dont la première extrémité (11) est en appui sur l'un des flasques et la seconde est reliée à des moyens de blocage à excentrique (12) munis d'au moins une came excentrée (13, 17) reliée à un levier de manoeuvre (14) et à la seconde extrémité (15) du tirant (10) et en appui sur l'autre flasque de la structure pour permettre le rapprochement de ces flasques et bloquer la colonne en position, caractérisé en ce qu'au moins un organe de roulement (18, 19) est interposé entre ladite au moins une came excentrée et le flasque correspondant de la structure de support.

2.- Dispositif de blocage selon la revendication 1, caractérisé en ce qu'un organe d'appui intermédiaire (16) est prévu entre ladite au moins une came et le flasque correspondant de la structure de support.

3.- Dispositif de blocage selon la revendication 2, caractérisé en ce que ledit au moins un organe de roulement (18, 19) est interposé entre ladite au moins une came (13, 17) et l'organe d'appui intermédiaire (16).

4.- Dispositif de blocage selon la revendication 3, caractérisé en ce que les moyens de blocage à excentrique comprennent deux cames excentrées (13, 17) disposées de part et d'autre de l'extrémité correspondante du tirant.

5.- Dispositif de blocage selon l'une quelconque des revendications 2 à 4, caractérisé en ce que le ou chaque organe de roulement (18, 19) est disposé dans un évidement (16a, 16b) correspondant de l'un des éléments, flasque ou organe d'appui intermédiaire ou came, et est adapté pour coopérer avec l'autre élément, came ou flasque ou organe d'appui intermédiaire, pour faciliter le déplacement de ces éléments l'un par rapport à l'autre.

6.- Dispositif de blocage selon la revendication 5, caractérisé en ce que l'organe d'appui intermédiaire (7) comporte un évidement (16a, 16b) de réception du ou de chaque organe de roulement (18, 19), en regard de la ou de chaque came (13, 17).

7.- Dispositif de blocage selon la revendication 6, caractérisé en ce que la ou chaque came comporte un évidement (13a, 17a) de réception du ou chaque organe de roulement (18, 19), délimitant une position de blocage stable.

8.- Dispositif de blocage selon la revendication 5, caractérisé en ce que la ou chaque came comporte au niveau de sa surface de contact avec l'organe d'appui intermédiaire, un évidement de réception du ou de chaque organe de roulement.

9.- Dispositif de blocage selon la revendication 8, caractérisé en ce que l'organe d'appui intermédiaire (16) comporte un évidement de réception du ou de chaque organe de roulement (18, 19) délimitant une position de blocage stable.

10.- Dispositif de blocage selon l'une quelconque des revendications précédentes, caractérisé en ce que ledit au moins un organe de roulement (18, 19) comprend une bille.

11.- Dispositif de blocage selon l'une quelconque des revendications précédentes, caractérisé en ce que la seconde extrémité (11) du tirant (10) comprend une portion filetée (11a) sur laquelle est disposé un écrou (20) d'appui sur le flasque correspondant.

## FIG.1

FIG.2

Office européen
des brevets

**RAPPORT DE RECHERCHE EUROPEENNE**

Numero de la demande

EP 91 40 2974

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | EP-A-0 411 312 (PORSCHE) <br> * colonne 2, ligne 35 - colonne 3, ligne 20; revendications 1,2; figure 4 * | 1-3,11 | B 62 D 1/18 <br> F 16 B 2/18 |
| A | EP-A-0 242 928 (VOLVO CAR) <br> * figure 1 * | 1 | |
| A,D | FR-A-2 360 454 (CHRYSLER FRANCE) <br> * figures 1,4 * | 1,4 | |
| A | DE-A-2 558 985 (TOYOTA JIDOSHA KOGYO) <br> * page 5, dernier alinéa - page 7, ligne 2; figures 5,6 * | 1 | |
| A | US-A-2 778 083 (IMPARATO) <br> * figures * | 4 | |

**DOMAINES TECHNIQUES RECHERCHES (Int. Cl.5)**

B 62 D
F 16 B

Le présent rapport a été établi pour toutes les revendications

| Lieu de la recherche | Date d'achèvement de la recherche | Examinateur |
|---|---|---|
| BERLIN | 12-02-1992 | BROYDE M P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)